# EUROPÄISCHE PATENTSCHRIFT

(11) **EP 2 781 404 B1**
(45) Veröffentlichungstag und Bekanntmachung des Hinweises auf die Patenterteilung: **08.05.2019**
(21) Anmeldenummer: 14160720.0
(22) Anmeldetag: 19.03.2014
(51) Int. Cl.: B60P 1/04

(54) **Vorrichtung zur Überwachung der Standsicherheit eines Kippsattelaufliegers**
Device for monitoring the stability of a tilting semitrailer
Dispositif de surveillance de la sécurité d'état d'une semi-remorque basculante

(30) Priorität: 19.03.2013 DE 102013102790
(43) Veröffentlichungstag der Anmeldung: 24.09.2014
(73) Patentinhaber: Schmitz Cargobull Gotha GmbH, 99867 Gotha (DE); KNORR-BREMSE Systeme für Nutzfahrzeuge GmbH, 80809 München (DE)
(72) Erfinder: Eberle, Reinhard, 89155 Erbach (DE); Hey, Jeffrey, 99867 Gotha (DE); Flach, Oskar, 35037 Marburg (DE); Mederer, Martin, 92318 Neumarkt-Rittershof (DE); Bühling, Simon, 80796 München (DE); Fry, Matthew, Bristol, Bristol BS48 1PP (GB); Andrews, Tim, Bristol, Bristol BS30 5WB (GB)
(74) Vertreter: Baur & Weber Patentanwälte PartG mbB

(56) Entgegenhaltungen:
- WO-A1-87/02128
- GB-A- 2 046 957
- US-A- 4 682 145
- US-A1- 2008 164 664

## Beschreibung

Die Erfindung betrifft eine Vorrichtung zur Überwachung der Standsicherheit eines Kippsattelaufliegers.

Sattelzüge, wie sie aus dem allgemeinen Stand der Technik bekannt sind, werden oftmals mit Kippsattelauflieger versehen, um Schüttgut wie Sand, Kies oder Erdreich zu transportieren. Kippsattelauflieger werden insbesondere im Baustellenbetrieb eingesetzt und werden dabei auf unebenen Oberflächen bewegt, wobei oftmals erheblicher Rangieraufwand besteht, um die Ladung an die gewünschte Stelle abzuliefern. Die Standsicherheit des Sattelzuges wird beim Ankippen des Kippaufliegers durch vielerlei Faktoren beeinflusst. So kann sich beispielsweise eine zu starke Seitenneigung negativ auf die Standsicherheit auswirken.

Oftmals ist jedoch die Ursache für umkippende Sattelzüge auch in einem eingeknickt stehenden Sattelzug zu suchen. Der Sattelauflieger und das Zugfahrzeug sind üblicherweise über eine Aufliegerplatte und einen Königszapfen verbunden, wobei bei Geradeausfahrt ein entsprechender Spielraum in der Sattelkupplung vorgesehen sein muss, um das Durchfahren von Senken oder Kuppen zu ermöglichen. Dies vermindert jedoch die Standfestigkeit im eingeknickten Zustand, da die Sattelkupplung nicht für eine entsprechende Stützfunktion sorgen kann.

Die US 4 682 145 A zeigt einen Kippsensor sowie eine Kippanzeige für einen Sattelauflieger, wobei der Sensor kardanisch gelagert am Auflieger moniert ist und den Rollwinkel um die Längsachse an die Kippanzeige meldet.

Die Kippanzeige ist im Fahrerhaus montiert und zeigt eine drohende Kippgefahr basierend auf dem Rollwinkel an.

Neben der Gefahr, die ein Umkippen des Sattelzugs darstellt, ist eine ungünstige Standposition auch nachteilig für eine Kippvorrichtung, die üblicherweise als teleskopartige Hydraulikvorrichtung bereitgestellt wird. Im Falle einer ungünstigen Standposition des Sattelzuges wird im ausgeklappten Zustand des Kippaufliegers eine hohe Seitenkraft auf die Teleskopvorrichtung übertragen, die folglich einen erhöhten Wartungsbedarf aufweist oder gar Schaden nimmt.

Es besteht folglich in der Technik ein Bedarf, das Ankippen eines Kippsattelzuges zuverlässig zu überwachen, um die o. g. Probleme zu überwinden.

Es ist daher Aufgabe der Erfindung, eine Vorrichtung zur Überwachung der Standsicherheit eines Kippsattelaufliegers zu schaffen, bzw. ein Verfahren zur Überwachung der Standsicherheit eines Kippsattelaufliegers anzugeben, dass auf einfache Weise in einen Kippsattelauflieger integrierbar ist.

Diese Aufgabe wird durch die Merkmale des Patentanspruchs 1 gelöst. Weitere vorteilhafte Ausgestaltungen der Erfindung sind jeweils Gegenstand der Unteransprüche. Diese können in technologisch sinnvoller Weise miteinander kombiniert werden. Die Beschreibung, insbesondere im Zusammenhang mit der Zeichnung, charakterisiert und spezifiziert die Erfindung zusätzlich.

Gemäß der Erfindung wird eine Vorrichtung zur Überwachung der Standsicherheit eines Sattelzuges angegeben, mit einem Zugfahrzeug und einem Kippsattelauflieger umfassend eine erste Sensoreinheit zur Bestimmung eines Seitenneigungswinkels des Sattelzuges, eine zweite Sensoreinheit zur Bestimmung eines Kippwinkels eines Kippaufbaus des Kippsattelaufliegers, eine dritte Sensoreinheit zur Bestimmung eines Einknickwinkels zwischen Zugfahrzeug und Kippsattelauflieger und eine Steuereinheit, die den Seitenneigungswinkel, den Kippwinkel und den Einknickwinkel verknüpft und ein Signal abgibt, das beim Ankippen des Kippaufbaus ein Erreichen einer die Standsicherheit des Sattelzuges gefährdenden Kombination aus Seitenneigungswinkel, Kippwinkel und Einknickwinkel anzeigt.

Die erfindungsgemäße Vorrichtung verknüpft somit die die Standsicherheit negativ beeinflussenden Parameter Seitenneigungswinkel, Kippwinkel und Einknickwinkel, um während des Ankippen des Kippaufbaus vor kritischen Situationen zu warnen, indem ein Signal abgegeben wird. So ist beispielsweise bei einem seitlich geneigten Fahrzeug der maximal tolerierbare Ankippwinkel des Kippaufbaus geringer als bei einem nicht geneigten Fahrzeug. Sollte dann noch zusätzlich ein Einknickwinkel zwischen dem Zugfahrzeug und dem Kippsattelauflieger vorliegen, ist der maximal mögliche Kippwinkel nochmals reduziert. Durch die Verknüpfung dieser drei Größen ist somit ein frühzeitiges Erkennen einer möglicherweise gefährlichen Situation möglich, so dass die erfindungsgemäße Vorrichtung hilft, Unfälle beim Betrieb von Sattelzügen mit Kippsattelauflieger zu vermeiden.

Gemäß einer Ausführungsform der Erfindung umfasst die erste Sensoreinheit einen Beschleunigungssensor, einen flüssigkeitsgefüllten Neigungswinkelgeber oder einen Gyroskopsensor.

Die erste Sensoreinheit, die die Seitenneigung des Sattelzuges bestimmt, läßt sich auf vielfältige Art realisieren.

Gemäß einer weiteren Ausführungsform der Erfindung umfasst die zweite Sensoreinheit einen Drehwinkelsensor oder einen weiteren Beschleunigungssensor.

Ein Drehwinkelsensor kann zwischen einem Chassis des Kippsattelaufliegers und dem Kippaufbau angebracht werden, so dass das Ankippen des Kippaufbaus mit der zweiten Sensoreinrichtung zuverlässig und auf einfache Weise gemessen werden kann. Ebenso ist es möglich, einen Beschleunigungssensor zu verwenden, der die Lageveränderung des Kippaufbaus während des Ankippens kontinuierlich aufzeichnet, so dass sich die aktuelle Position des Kippaufbaus rekonstruieren läßt.

Gemäß einer weiteren Ausführungsform weist die dritte Sensoreinheit an einer Achse eines Sattelaufliegers jeweils zur Drehzahlmessung eines linken Aufliegerrades und eines rechten Aufliegerrades Raddrehzahlsensoren auf.

Gemäß dieser Ausführungsform macht man sich zunutze, dass bei Kurvenfahrten bzw. beim Rangieren, bei dem auch ein Rad still stehen kann, zwischen kurveninnerem und kurvenäußerem Rad unterschiedliche Wegstrecken zurück gelegt werden. Die unterschiedlichen Wegstrecken führen zu unterschiedlichen Drehzahlen des jeweiligen Rades, so dass aus den Drehzahlmessungen und aus der Differenz der Drehzahlmessungen ein Einknickwinkel zwischen Zugfahrzeug und Kippsattelauflieger berechnet werden kann.

Gemäß einer weiteren Ausführungsform der Erfindung sind die Raddrehzahlsensoren Sensoren eines Antiblockiersystems.

Moderne Sattelzüge werden heutzutage mit Antiblockiersystemen ausgestattet, die aktive Sensoren aufweisen, die die Drehzahl der zu überwachenden Räder kontinuierlich bestimmen. Diese aktiven Sensoren weisen eine hohe Genauigkeit auf, so dass beispielsweise Geschwindigkeiten bis 0,1 km/h detektiert werden können. Folglich ist es möglich, die Sensoren des Antiblockiersystems als Raddrehzahlsensoren zu verwenden, ohne dass dabei Nachrüstkosten entstehen. Sollte der Sattelzug kein Antiblockiersystem aufweisen, können auch andere Sensoren verwendet werden, die für diesen Zweck an dem Fahrzeug angebracht werden. Es ist aber auch denkbar, beispielsweise Drehzahlsensoren anderer Assistenzsysteme, wie zum Beispiel eines elektronischen Stabil i-tätsassistenten, zu verwenden.

Gemäß einer weiteren Ausführungsform der Erfindung sind weitere Raddrehzahlsensoren vorgesehen, die eine Drehzahlmessung von Rädern einer Hinterachse des Zugfahrzeugs, einer Vorderachse des Zugfahrzeugs oder weiterer Achsen des Kippsattelaufliegers ermöglichen.

Demgemäß können weitere Achsen in Bezug auf unterschiedliche Drehzahlen eines kurveninneren und eines kurvenäußeren Rades mit in die Bestimmung des Einknickwinkels einbezogen werden. Dies ermöglicht eine genauere Berechnung des Einknickwinkels. Der Einknickwinkel kann aus den Drehzahlen und der Differenz der Drehzahlen der Raddrehzahlsensoren in der Steuereinheit bestimmt werden.

Gemäß einer weiteren Ausführungsform der Erfindung unterbindet das Signal der Steuereinheit ein weiteres Anstellen des Kippaufbaus.

Demgemäß wird das Erreichen einer kritischen Position von der Vorrichtung gemäß der Erfindung erkannt und der Fahrerin oder dem Fahrer ist es nun nicht mehr möglich, den Kippaufbau weiter anzustellen, um beispielsweise fest anhaftende Ladung, wie feuchtes Erdreich oder dergleichen, zu lösen. Dadurch wird die Unfallgefahr bzw. die Verschleißanfälligkeit der Teleskopvorrichtung zum Ankippen des Kippaufbaus deutlich reduziert. Durch die Festlegung bestimmter kritischer Konfigurationen des Sattelzuges wird nunmehr erreicht, dass die Standsicherheit gefährdende Positionen vermieden werden, ohne sich allein auf das Gespür der Fahrerin oder des Fahrers zu verlassen.

In einer weiteren Ausführungsform der Erfindung ist die Steuereinheit mit einem Datenaufzeichnungsgerät verbunden, das die gemessenen Werte des Seitenneigungswinkels, des Kippwinkels und des Einknickwinkels aufzeichnet.

Das Aufzeichnen der gemessenen Werte kann zum einen zur Rekonstruktion im Falle eines Unfalls, wie z. B. dem Umkippen des Sattelzugs, herangezogen werden. Es ist aber auch möglich, dass das Datenaufzeichnungsgerät bei einer Wartung des Kippsattelaufliegers ausgelesen wird, so dass eventuelle Hinweise auf erhöhten Verschleiß der Teleskopvorrichtung eine entsprechende Überprüfung zur Folge haben können.

In einer weiteren Ausführungsform der Erfindung ist die Steuereinheit mit einer Funkschnittstelle verbunden, die geeignet ist, die gemessenen Werte des Seitenneigungswinkels, des Kippwinkels und des Einknickwinkels weiterzuleiten.

Demgemäß ist auch eine Fernüberwachung des Sattelzuges bzw. des Kippsattelaufliegers beispielsweise durch ein Fuhrparkunternehmen möglich. Die Weiterleitung der Daten aus der Steuereinheit kann wiederum zu Dokumentationszwecken herangezogen werden, wobei insbesondere auch eine Rekonstruktion eines eventuellen Unfalls möglich ist.

Die Funkschnittstelle kann nach einem Mobilfunkstandard, vorzugsweise einem GSM-Standard oder einem UMTS-Standard oder einem LTE-Standard ausgeführt sein.

Dies ermöglicht die gemessenen Werte der Steuereinheit beispielsweise an ein Mobiltelefon weiter zu leiten, so dass die Fahrerin oder der Fahrer des Sattelzuges bereits vor Ort die entsprechenden Informationen zur Verfügung hat, so dass über eine entsprechende Warnanzeige auf dem Mobiltelefon eine Reaktion der Fahrerin oder des Fahrers erfolgen kann.

Gemäß einer weiteren Ausführungsform der Erfindung ist die Steuereinheit darüber hinaus mit einer Luftfederung des Kippsattelaufliegers verbunden, so dass beim Ankippen des Kippaufbaus ein Absenken der Luftfederung erfolgt.

Durch das Absenken der Luftfederung erhöht sich die Standsicherheit des Kippsattelaufliegers, so dass eine automatisierte Absenkung eine weitere Verbesserung der Standsicherheit schafft.

In einer weiteren Ausführungsform der Erfindung signalisiert die Steuereinheit bei Beendigung des Abladevorgangs der Luftfederung ein Anheben.

Der Sattelzug kann nun den normalen Fahrbetrieb wieder aufnehmen, ohne dass dabei ein Eingreifen der Fahrerin oder des Fahrers erforderlich ist.

Die Steuereinheit kann darüber hinaus mit einem Reifendrucküberwachungssystem verbunden sein, das den Reifendruck einer oder mehrerer Räder des Zugfahrzeugs oder des Kippsattelaufliegers ausgibt, wobei die Steuereinheit den gemessenen Reifendruck mit dem Seitenneigungswinkel, dem Kippwinkel und dem Einknickwinkel verknüpft.

Unzureichend befüllte Räder verringern ebenso die Standsicherheit eines Kippsattelaufliegers bzw. eines Zugfahrzeugs. Indem der Steuereinheit Druckwerte der Reifen über das Reifendrucküberwachungssystem mitgeteilt werden, können schlecht befüllte Reifen in die Bestimmung des die Standsicherheit des Sattelzugs gefährdenden Bereiches einbezogen werden. Ebenso ist es möglich, dass die Steuereinheit ein Signal an eine Reifenfüllanlage abgibt, die nicht vollständig befüllte Reifen entsprechend nachfüllt, bevor ein Ankippen des Kippaufbaus erfolgt.

Nachfolgend werden einige Ausführungsbeispiele anhand der Zeichnung näher erläutert. Es zeigen:
- Fig. 1 (A): einen Sattelzug in einer Draufsicht,
- Fig. 1 (B): einen Sattelzug in einer Seitenansicht,
- Fig. 1 (C): eine rückwärtige Ansicht eines Sattelzuges,
- Fig. 2: ein Sattelzug mit einem Kippsattelauflieger in einer angekippten Position, und
- Fig. 3: eine schematische Darstellung einer erfindungsgemäßen Vorrichtung.

In den Figuren sind gleiche oder funktional gleich wirkende Bauteile mit den gleichen Bezugszeichen versehen.

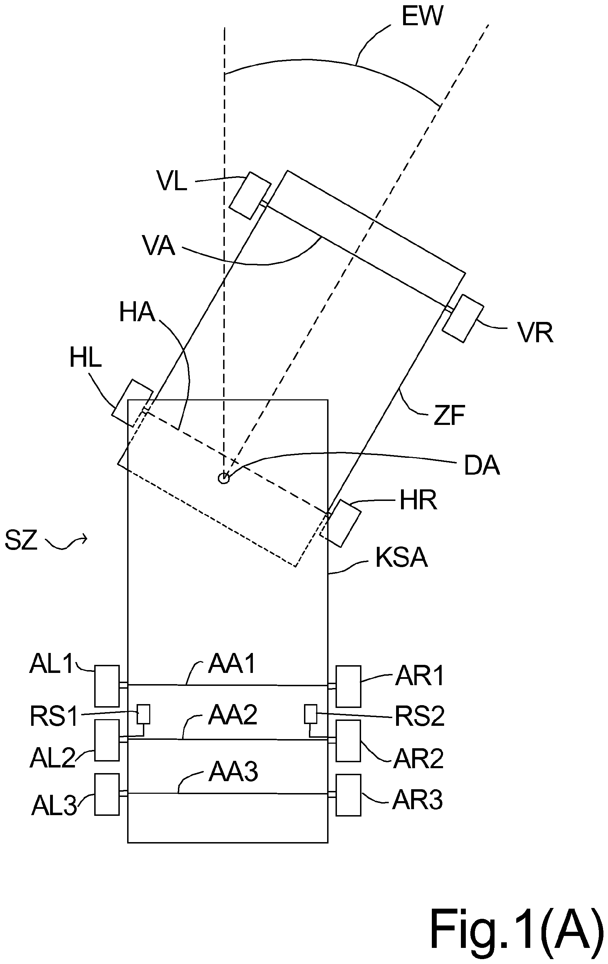

Zur Verdeutlichung der Erfindung ist in Fig. 1 (A) schematisch ein Sattelzug SZ in einer Draufsicht gezeigt. Der Sattelzug SZ umfasst ein Zugfahrzeug ZF und einen Kippsattelauflieger KSA. Das Zugfahrzeug ZF weist eine Vorderachse VA auf, an die ein linkes Vorderrad VL und ein rechtes Vorderrad VR angebracht sind. Desweiteren weist das Zugfahrzeug ZF eine Hinterachse HA auf, die mit einem linken Hinterrad HL und einem rechten Hinterrad HR verbunden ist. Desweiteren ist der Kippsattelauflieger KSA mit einer ersten Aufliegerachse AA1, mit einer zweiten Aufliegerachse AA2 und mit einer dritten Aufliegerachse AA3 versehen, die jeweils auf ihrer linken Seite ein linkes Aufliegerrad AL1 bis AL3 und auf der rechten Seite ein rechtes Aufliegerrad AR1 bis AR3 aufweisen.

Die in Fig. 1 (A) gezeigte Konfiguration mit zwei Achsen am Zugfahrzeug ZF und drei Achsen am Kippsattelauflieger KSA ist jedoch lediglich beispielhaft zu verstehen. So ist es möglich, das Zugfahrzeug ZF mit einer zusätzlichen Achse, beispielsweise einer zweiten Hinterachse, zu versehen. Ebenso ist es denkbar, den Kippsattelauflieger KSA lediglich mit ein oder zwei Aufliegerachsen bereit zu stellen, bzw. den Kippsattelauflieger KSA mit einer Liftachse zu versehen.

Das Zugfahrzeug ZF und der Kippsattelauflieger KSA sind (nicht in Fig. 1 (A) gezeigt) mittels eines Königszapfens und einer Aufliegerplatte miteinander verbunden. Diese Verbindungsstelle zwischen dem Zugfahrzeug ZF und dem Kippsattelauflieger KSA definiert eine Drehachse, die in Fig. 1 (A) schematisch mit dem Bezugszeichen DA versehen ist.

Wenn die Längsachse des Zugfahrzeugs ZF und die Längsachse des Kippsattelaufliegers KSA voneinander abweichen, wird ein Einknickwinkel EW definiert, wie in Fig. 1 (A) dargestellt. Der Einknickwinkel EW beträgt 0°, solange der Sattelzug SZ geradeaus fährt.

Wenn nun eine Rechtskurve oder eine Linkskurve durchfahren wird, weicht der Knickwinkel von 0° ab, wobei das kurveninnere Rad eine geringere Wegstrecke durchfährt als das kurvenäußere Rad.

Da die Geschwindigkeit des Sattelzuges SZ für das kurveninnere und das kurvenäußere Rad gleich ist, unterscheiden sich diese entsprechend in ihrer Drehzahl. Um diese Drehzahl bestimmen zu können, sind Raddrehzahlsensoren vorgesehen, die wenigstens einer Achse zugeordnet sind.

In dem in Fig. 1 (A) gezeigten Beispiel sind sowohl das linke Aufliegerrad AL2 als auch das rechte Aufliegerrad AR2 der mittleren Achse AA2 mit Raddrehzahlsensoren, in Fig. 1 (A) RS1 und RS2 bezeichnet, versehen.

Um den Einknickwinkel EW bestimmen zu können, werden die Drehzahlen des ersten Raddrehzahlsensors RS1 und des zweiten Raddrehzahlsensors RS2 ausgewertet, wobei aus den Drehzahlwerten und der Differenz der Drehzahlen des linken Aufliegerrads AL2 und des rechten Aufliegerrads AR2 auf den Einknickwinkel EW zurück geschlossen werden kann. Die Raddrehzahlsensoren RS1 und RS2 werden beispielsweise als Sensoren eines Antiblockiersystems bereit gestellt. Es ist aber auch denkbar, weitere Raddrehzahlsensoren vorzusehen, die eine Drehzahlmessung von Rädern der Hinterachse HA, der Vorderachse VA des Zugfahrzeugs ZF oder der weiteren Achsen AA1 und AA3 des Kippsattelaufliegers vornehmen. Diese Drehzahlmessungen können ebenfalls in die Bestimmung des Einknickwinkels EW einfließen, wobei durch die Hinzunahme weiterer Achsen des Zugfahrzeugs ZF die Präzision der Bestimmung des Einknickwinkels EW zunimmt.

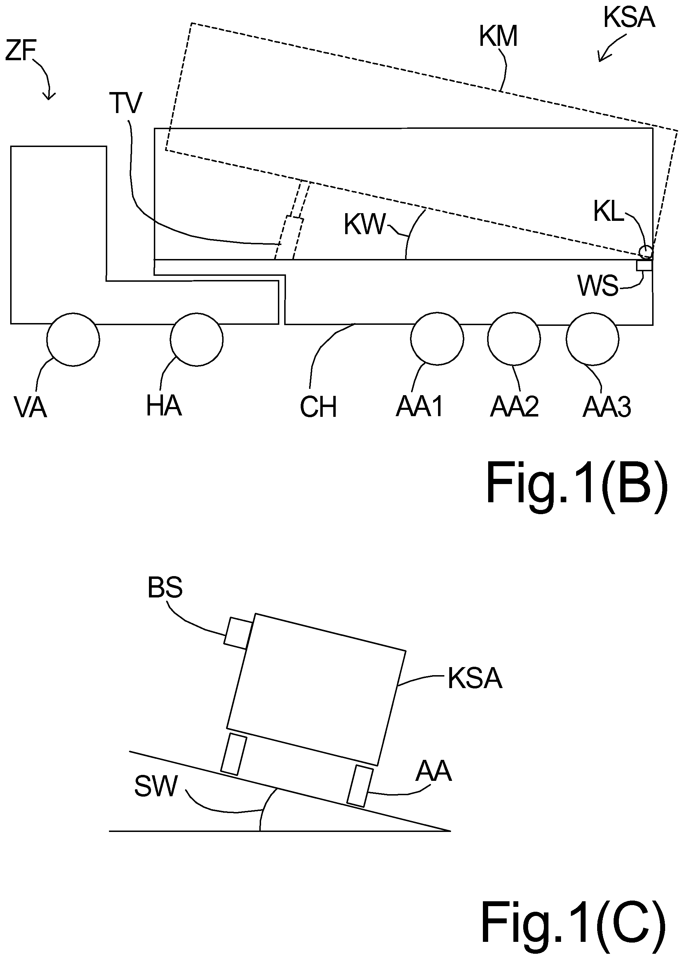

In Fig. 1 (B) ist eine Seitenansicht des Sattelzugs SZ gezeigt. Der Kippsattelauflieger KSA weist eine Kippmulde KM auf, die mittels eines Kipplagers KL, das an einem hinteren Ende des Kippsattelaufliegers KSA angeordnet ist und einer hydraulischen Teleskopvorrichtung TV von einer ersten Position, in der die Kippmulde KM auf einem Chassis CH aufliegt in eine zweite Position kippbar, so dass die Kippmulde KM bezüglich des Chassis CH einen Kippwinkel KW aufweist. Zur Bestimmung des Kippwinkels KW ist ein Winkelsensor WS vorgesehen, der wie in Fig. 1 (B) gezeigt ist, in der Nähe des Kipplagers KL angeordnet ist. Bei dem Winkelsensor WS kann es sich beispielsweise um einen Drehsensor handeln, der ähnlich wie ein Potentiometer eine Wegstrecke in ein elektrisches Signal umsetzt. Es ist aber auch ebenso denkbar, den Winkelsensor als Beschleunigungssensor bereitzustellen, der die Bewegung der Kippmulde aufzeichnet, so dass aus den Beschleunigungswerten auf die aktuelle Position der Kippmulde KM zurückgeschlossen werden kann.

In Fig. 1 (C) ist der Sattelzug SZ in einer rückwärtigen Ansicht gezeigt. In diesem Beispiel weist der Sattelzug SZ eine Seitenneigung auf, die, wie in Fig. 1 (C) gezeigt ist, durch einen Seitenneigungswinkel SW beschrieben werden kann. Um den Seitenneigungswinkel SW bestimmen zu können, ist ein Beschleunigungssensor BS vorgesehen, der die Beschleunigungswerte am Kippsattelauflieger KSA aufzeichnet, so dass dessen Position bestimmt werden kann. Es ist aber auch möglich, beispielsweise einen flüssigkeitsgefüllten Neigungswinkelgeber, der über eine Kapazitätsmessung den Seitenneigungswinkel SW bestimmen kann, oder einen Gyroskopsensor zu verwenden.

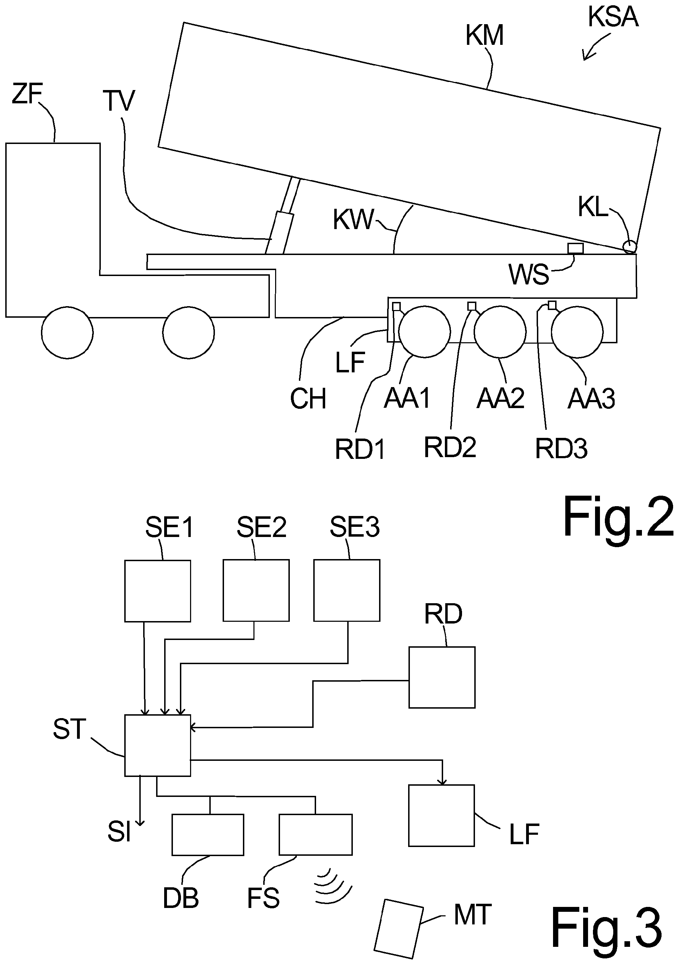

In Fig. 2 ist eine weitere Seitenansicht des Sattelzugs SZ gezeigt. Der Sattelzug SZ weist ein Reifendrucküberwachungssystem RD auf, das den Reifendruck eines oder mehrere Räder des Zugfahrzeugs ZF oder des Kippsattelaufliegers KSA bestimmt. Schematisch sind in Fig. 2 für die Räder des Kippsattelaufliegers KSA drei Reifendrucksensoren RD1, RD2 und RD3 gezeigt, die den Reifendruck innerhalb der Räder der Aufliegerachsen AA1, AA2 und AA3 bestimmen.

Desweiteren weist der Kippsattelauflieger KSA eine Luftfederung LF auf, die auf fachübliche Weise eine Verbindung der Aufliegerachsen AA1, AA2 und AA3 mit dem Chassis CH herstellt. Die Luftfederung ermöglicht ein Absenken oder ein Anheben des Kippsattelaufliegers, indem der pneumatische Druck innerhalb der Luftfederung LF gesteuert wird.

In Fig. 3 sind die bisher in Zusammenhang mit Fig. 1 (A) bis 1 (C) und mit Fig. 2 beschriebenen Einzelkomponenten in einem schematischen Diagramm zusammen gefasst.

So ist eine erste Sensoreinheit SE1 zur Bestimmung des Seitenneigungswinkels SW vorgesehen, die den im Zusammenhang mit Fig. 1 (C) beschriebenen Beschleunigungssensor BS umfasst.

Eine zweite Sensoreinheit SE2 umfasst den Winkelsensor WS, wie in Fig. 1 (B) beschrieben. Die zweite Sensoreinheit SE2 ist somit geeignet, den Kippwinkel KW eines Kippaufbaus (beispielsweise die Kippmulde KM) des Kippsattelaufliegers KSA zu bestimmen.

Eine dritte Sensoreinheit SE3 umfasst die im Zusammenhang mit Fig. 1 (A) beschriebenen Reifendrehzahlsensoren RS1 und RS2.

Die Messwerte der ersten Sensoreinheit SE1, der zweiten Sensoreinheit SE2 und der dritten Sensoreinheit SE3 werden an eine Steuereinheit ST weiter gegeben, in der der Seitenneigungswinkel SW, der Kippwinkel KW und der Einknickwinkel ES verknüpft werden. Somit ist es möglich, beim Ankippen des Kippaufbaus KA ein Erreichen einer die Standsicherheit des Sattelzugs SZ gefährdenden Kombination aus Seitenneigungswinkel SW, Kippwinkel KW und Einknickwinkel EW zu bestimmen. Demgemäß können die unterschiedlichen Parameter Seitenneigungswinkel SW, Kippwinkel KW und Einknickwinkel EW während des Ankippens des Kippaufbaus KA kontinuierlich bestimmt werden.

Die Standsicherheit des Sattelzuges SZ nimmt bei zunehmenden Seitenneigungswinkel SW und bei größer werdendem Einknickwinkel EW entsprechend ab. Daher kann der maximal zur Verfügung stehende Kippwinkel KW entsprechend des tatsächlichen Werts des Seitenneigungswinkels SW und/oder des Einknickwinkels EW begrenzt werden.

Die Verknüpfung der mit den drei Sensoreinheiten SE1 bis SE3 bestimmten Größen kann beispielsweise mittels einer Tabelle erfolgen, die für jede Kombination einen Eintrag enthält, der anzeigt, ob die Standsicherheit des Sattelzuges SZ gefährdet ist. Folglich ist die Einschätzung, ob der Sattelzug SZ sich in einer ungünstigen Position befindet, so dass ein weiteres Ankippen der Kippmulde KM mit einer erhöhten Belastung für die Teleskopvorrichtung TV oder gar mit einem Umkippen des Sattelzugs SZ verbunden wäre, nicht mehr nur allein von der Fahrerin oder dem Fahrer des Sattelzugs SZ getroffen werden, sondern wird automatisch durch die Steuereinheit ST überwacht.

Die Steuereinheit ST kann auch erweitert werden, um weitere, die Standsicherheit des Sattelzugs SZ gefährdende Parameter zu berücksichtigen.

So kann die Steuereinheit ST beispielsweise mit den Messwertgebern des Reifendrucküberwachungssystems RD verbunden sein, so dass die tatsächlich vorliegenden Druckwerte der Reifen in die Verknüpfung des Seitenneigungswinkels SW, des Kippwinkels KW und des Einknickwinkels EW mit einbezogen werden. Insbesondere kann eine zu geringe Befüllung der Reifen die Standsicherheit des Kippsattelaufliegers KSA beeinflussen. Dies kann noch verstärkt werden, wenn beispielsweise die Reifen des Kippsattelaufliegers KSA nur an einer Seite mit zu geringem Reifendruck versehen sind.

Die Steuereinheit ST kann ein Signal SI abgeben, das die Verknüpfung der gemessenen Winkel SW, KW und EW repräsentiert. Dieses Signal SI kann auch dazu verwendet werden, die Luftfederung LF automatisch abzusenken, wenn die zweite Sensoreinheit SE2 einen Kippwinkel KW signalisiert, der von einer aufliegenden Position der Kippmulde KM abweicht. Ebenso ist es denkbar, dass die Luftfederung LF wieder angehoben wird, wenn der Abladevorgang beendet ist. Somit wird während des Abladevorgangs die Luftfederung LF automatisch abgesenkt, was eine verbesserte Standsicherheit des Kippsattelaufliegers KSA zur Folge hat.

Das Signal SI sowie die gemessenen Winkel SW, KW und EW und gegebenenfalls weitere Parameter können aber auch anderen Überwachungssystemen innerhalb des Sattelzugs zur Verfügung gestellt werden. Dazu ist es vorgesehen, dass das Signal SI oder die Messwerte SW, KW und EW an einen Datenbus DB übertragen wird. Alternativ oder zusätzlich kann das Signal SI oder die Messwerte SW, KW und EW an eine Funkschnittstelle FS übertragen werden, die beispielsweise nach einem Mobilfunkstandard (GSM, UMTS, LTE, EDGE oder ähnliche Protokolle) ausgeführt ist, so dass die Werte des Seitenneigungswinkels SW, des Kippwinkels KW und des Einknickwinkels EW sowie eventueller weiterer Größen an ein Mobiltelefon MT übertragen werden kann. Das Mobiltelefon MT kann beispielsweise von der Fahrerin oder dem Fahrer des Sattelzuges SZ während des Abladevorgangs des Kippsattelzuges als Kontrollanzeige verwendet werden.

Desweiteren kann es vorgesehen sein, die von der Steuereinheit ST empfangenen Größen, wie Seitenneigungswinkel SW, Einknickwinkel EW, Kippwinkel KW, sowie gegebenenfalls weiterer Messgrößen wie Reifendruckwerte oder ähnliches, über die Funkschnittstelle FS an ein externes Datenaufzeichnungsgerät zu übertragen. Das Datenaufzeichnungsgerät kann beispielsweise bei einem Hersteller des Kippsattelaufliegers KSA oder bei dem Betreiber des Kippsattelaufliegers KSA, z. B. einem Bauunternehmen oder ähnlichem, während des Betriebs des Sattelzuges SZ die Werte per Fernerfassung aufzeichnen. Somit kann bei unsachgemäßer Bedienung des Kippsattelaufliegers KSA auf einfache Weise eine Wartungsintervallreduzierung, beispielsweise der Teleskopvorrichtung oder anderer von Verschleiß betroffener Komponenten, durchgeführt werden oder im Falle eines Unfalls, beispielsweise eines Umkippens des Sattelzuges SZ eine entsprechende Rekonstruktion der Sattelzugparameter erfolgen, so dass der Unfallhergang präziser rekonstruiert werden kann.

Ebenso kann es vorgesehen sein, dass das Datenaufzeichnungsgerät nicht über die Funkschnittstelle FS sondern über den Datenbus DB einen Bestandteil des Kippsattelaufliegers KSA oder des Zugfahrzeugs ZF bildet. Über eine entsprechende Schnittstelle kann das Datenerfassungsgerät dann bei Bedarf ausgelesen werden.

Die vorstehend und die in den Ansprüchen angegebenen sowie die den Abbildungen entnehmbaren Merkmale sind sowohl einzeln als auch in verschiedener Kombination vorteilhaft realisierbar.

## Patentansprüche

1. Vorrichtung zur Überwachung der Standsicherheit eines Sattelzuges (SZ) mit einem Zugfahrzeug (ZF) und einem Kippsattelauflieger (KSA) umfassend eine erste Sensoreinheit (SE1) zur Bestimmung eines Seitenneigungswinkels (SW) des Sattelzuges (SZ) **dadurch gekennzeichnet, dass** die Vorrichtung außerdem umfasst eine zweite Sensoreinheit (SE2) zur Bestimmung eines Kippwinkels (KW) eines Kippaufbaus (KA) des Kippsattelaufliegers (KSA), eine dritte Sensoreinheit (SE3) zur Bestimmung eines Einknickwinkels (EW) zwischen Zugfahrzeug (ZF) und Kippsattelauflieger (KSA) und eine Steuereinheit (ST), die den Seitenneigungswinkel (SW), den Kippwinkel (KW) und den Einknickwinkel (EW) verknüpft und ein Signal (SI) abgibt, das beim Ankippen des Kippaufbaus (KA) ein Erreichen einer die Standsicherheit des Sattelzuges (SZ) gefährdenden Kombination aus Seitenneigungswinkel (SW), Kippwinkel (KW) und Einknickwinkel (EW) anzeigt.

2. Vorrichtung nach Anspruch 1, bei der die erste Sensoreinheit (SE1) einen Beschleunigungssensor, einen flüssigkeitsgefüllten Neigungswinkelgeber oder einen Gyroskopsensor umfasst.

3. Vorrichtung nach Anspruch 1 oder 2, bei der die zweite Sensoreinheit (SE2) einen Drehwinkelsensor oder einen weiteren Beschleunigungssensor umfasst.

4. Vorrichtung nach einem der Ansprüche 1 bis 3, bei der die dritte Sensoreinheit (SE3) an einer Achse (AA) eines Sattelaufliegers (SA) jeweils zur Drehzahlmessung eines linken Aufliegerrades (AL) und eines rechten Aufliegerrades (AR) Reifendrehzahlsensoren (RS1, RS2) aufweist.

5. Vorrichtung nach Anspruch 4, bei der die Raddrehzahlsensoren (RS1, RS2) Sensoren eines Antiblockiersystems sind.

6. Vorrichtung nach Anspruch 4 oder 5, bei der weitere Raddrehzahlsensoren vorgesehen sind, die eine Drehzahlmessung von Rädern einer Hinterachse (AA), einer Vorderachse (VA) des Zugfahrzeugs (ZF) oder weiterer Achsen (AA2, AA3) des Kippsattelaufliegers (KSA) ermöglichen.

7. Vorrichtung nach einem der Ansprüche 4 bis 6, bei der die Steuereinheit aus den Drehzahlen und der Differenz der Drehzahlen der Raddrehzahlsensoren den Einknickwinkel (EW) bestimmt.

8. Vorrichtung nach einem der Ansprüche 1 bis 7, bei der das Signal (SI) ein weiteres Anstellen des Kippaufbaus (KA) unterbindet.

9. Vorrichtung nach einem der Ansprüche 1 bis 8, bei dem die Steuereinheit mit einem Datenaufzeichnungsgerät (DG) verbunden ist, das die gemessenen Werte des Seitenneigungswinkels (SW), des Kippwinkels (KW) und des Einknickwinkels (EW) aufzeichnet.

10. Vorrichtung nach einem der Ansprüche 1 bis 9, bei der die Steuereinheit (ST) mit einer Funkschnittstelle (FS) verbunden ist, die geeignet ist, die gemessenen Werte des Seitenneigungswinkels (SW) des Kippwinkels (KW) und des Einknickwinkels (EW) weiter zu leiten.

11. Vorrichtung nach Anspruch 10, bei der die Funkschnittstelle (FS) nach einem Mobilfunkstandard, vorzugsweise einem GSM-Standard oder einem UMTS-Standard oder einem LTE-Standard ausgeführt ist.

12. Vorrichtung nach einem der Ansprüche 1 bis 11, bei der die Steuereinheit darüber hinaus mit einer Luftfederung (LF) des Kippsattelaufliegers (KSA) verbunden ist, so dass bei Ankippen des Kippaufbaus (KA) ein Absenken der Luftfederung (LF) erfolgt.

13. Vorrichtung nach Anspruch 12, bei der die Steuereinheit darüber hinaus bei Beendigung des Abladevorgangs der Luftfederung (LF) ein Anheben signalisiert.

14. Vorrichtung nach einem der Ansprüche 1 bis 13, bei der die Steuereinheit (ST) darüber hinaus mit einem Reifendrucküberwachungssystem (RD) verbunden ist, das den Reifendruck einer oder mehrerer Räder des Zugfahrzeugs (ZF) oder des Kippsattelaufliegers (KSA) ausgibt, wobei die Steuereinheit (ST) den gemessenen Reifendruck oder die gemessenen Reifendrücke mit dem Seitenneigungswinkel (SW), dem Kippwinkel (KW) und dem Einknickwinkel (EW) verknüpft.

## Claims

1. Device for monitoring the stability of an articulated lorry (SZ) having a tractor (ZF) and an articulated tipper trailer (KSA), comprising a first sensor unit (SE1) for determining a lateral inclination angle (SW) of the articulated lorry (SZ), **characterized in that** the device additionally comprises a second sensor unit (SE2) for determining a tipping angle (KW) of a tipper body (KA) of the articulated tipper trailer (KSA), a third sensor unit (SE3) for determining a turning angle (EW) between tractor (ZF) and articulated tipper trailer (KSA), and a control unit (ST), which combines the lateral inclination angle (SW), the tipping angle (KW) and the turning angle (EW) and outputs a signal (SI) which, when tipping up the tipper body (KA), indicates that a combination of lateral inclination angle (SW), tipping angle (KW) and turning angle (EW) that threatens the stability of the articulated lorry (SZ) has been reached.

2. Device according to Claim 1, in which the first sensor unit (SE1) comprises an acceleration sensor, a liquid-filled inclination angle transmitter or a gyroscopic sensor.

3. Device according to Claim 1 or 2, in which the second sensor unit (SE2) comprises a rotational angle sensor or a further acceleration sensor.

4. Device according to one of Claims 1 to 3, in which the third sensor unit (SE3) has tyre rotational speed sensors (RS1, RS2) on an axle (AA) of a articulated lorry (SA), in each case for measuring the rotational speed of a left trailer wheel (AL) and a right trailer wheel (AR).

5. Device according to Claim 4, in which the wheel rotational speed sensors (RS1, RS2) are sensors of an anti-lock braking system.

6. Device according to Claim 4 or 5, in which further wheel rotational speed sensors are provided, which permit a rotational speed measurement of wheels of a rear axle (AA), a front axle (VA) of the tractor (ZF) or further axles (AA2, AA3) of the articulated tipper trailer (KSA).

7. Device according to one of Claims 4 to 6, in which the control unit determines the turning angle (EW) from the rotational speeds and the difference of the rotational speeds from the wheel rotational speed sensors.

8. Device according to one of Claims 1 to 7, in which the signal (SI) prevents further starting of the tipper body (KA).

9. Device according to one of Claims 1 to 8, in which the control unit is connected to a data recording device (DG), which records the measured values of the lateral inclination sensor (SW), of the tipping angle (KW) and of the turning angle (EW).

10. Device according to one of Claims 1 to 9, in which the control unit (ST) is connected to a radio interface (FS), which is suitable to pass on the measured values of the lateral inclination angle (SW), of the tipping angle (KW) and of the turning angle (EW).

11. Device according to Claim 10, in which the radio interface (FS) is implemented in accordance with a mobile radio standard, preferably a GSM standard or a UMTS standard or an LTE standard.

12. Device according to one of Claims 1 to 11, in which the control unit is also connected to an air suspension (LF) of the articulated tipper trailer (KSA), so that when starting to tilt the tipper body (KA), the air suspension (LF) is lowered.

13. Device according to Claim 12, in which the control unit also signals the air suspension (LF) to lift when the unloading operation is completed.

14. Device according to one of Claims 1 to 13, in which the control unit (ST) is also connected to a tyre pressure monitoring system (RD), which outputs the tyre pressure of one or more wheels of the tractor (ZF) or the articulated tipper trailer (KSA), wherein the control unit (ST) combines the measured tyre pressure or the measured tyre pressures with the lateral inclination angle (SW), the tipping angle (KA) and the turning angle (EW).

## Revendications

1. Dispositif de surveillance de la stabilité d'un ensemble semi-remorque (SZ) comportant un véhicule tracteur (ZF) et une semi-remorque basculante (KSA), comprenant une première unité de détection (SE1) pour déterminer un angle d'inclinaison latérale (SW) de l'ensemble semi-remorque (SZ), **caractérisé en ce que** le dispositif comprend en outre une deuxième unité de capteur (SE2) pour déterminer un angle de basculement (KW) d'une benne basculante (KA) de la semi-remorque basculante (KSA), une troisième unité de capteur (SE3) pour déterminer un angle de gauchissement (EW) entre le véhicule tracteur (ZF) et la semi-remorque basculante (KSA) et une unité de commande (ST) qui combine l'angle d'inclinaison latérale (SW), l'angle de basculement (KW) et l'angle de gauchissement (EW) et émet un signal (SI) qui, lorsque la benne basculante (KA) est inclinée, indique qu'une combinaison de l'inclinaison latérale (SW), de l'angle de basculement (KW) et de l'angle de gauchissement (EW) a été atteinte, menaçant la stabilité de l'ensemble semi-remorque (SZ).

2. Dispositif selon la revendication 1, dans lequel la première unité de capteur (SE1) comprend un capteur d'accélération, un capteur d'angle d'inclinaison rempli de liquide ou un capteur gyroscopique.

3. Dispositif selon la revendication 1 ou 2, dans lequel la deuxième unité de capteur (SE2) comprend un capteur d'angle de rotation ou un autre capteur d'accélération.

4. Dispositif selon l'une des revendications 1 à 3, dans lequel la troisième unité de capteur (SE3) comporte des capteurs de vitesse de rotation de pneus (RS1, RS2) au niveau d'un essieu (AA) d'une semi-remorque (SA), destinés à mesurer respectivement la vitesse de rotation d'une roue gauche (AL) et d'une roue droite (AR).

5. Dispositif selon la revendication 4, dans lequel les capteurs de vitesse de rotation de roues (RS1, RS2) sont des capteurs d'un système de freinage antiblocage.

6. Dispositif selon la revendication 4 ou 5, dans lequel il est prévu des capteurs de vitesse de roues supplémentaires qui permettent de mesurer la vitesse de rotation des roues au niveau d'un essieu arrière (AA), d'un essieu avant (VA) du véhicule tracteur (ZF) ou d'autres essieux (AA2, AA3) de la semi-remorque basculante (KSA).

7. Dispositif selon l'une des revendications 4 à 6, dans lequel l'unité de commande détermine l'angle de gauchissement (EW) à partir des vitesses de rotation et de la différence entre les vitesses de rotation des capteurs de vitesse de roues.

8. Dispositif selon l'une des revendications 1 à 7, dans lequel le signal (SI) empêche un autre basculement de la benne (KA).

9. Dispositif selon l'une des revendications 1 à 8, **caractérisé en ce que** l'unité de commande est reliée à un appareil d'enregistrement de données (DG) qui enregistre les valeurs mesurées de l'angle d'inclinaison latérale (SW), de l'angle de basculement (KW) et de l'angle de gauchissement (EW).

10. Dispositif selon l'une des revendications 1 à 9, **caractérisé en ce que** l'unité de commande (ST) est reliée à une interface radio (FS) qui est conçue pour transmettre les valeurs mesurées de l'angle d'inclinaison latérale (SW), de l'angle de basculement (KW) et de l'angle en gauchissement (EW).

11. Dispositif selon la revendication 10, dans lequel l'interface radio (FS) est conçue conformément à une norme radio mobile, de préférence une norme GSM ou une norme UMTS ou une norme LTE.

12. Dispositif selon l'une des revendications 1 à 11, dans lequel l'unité de commande est en outre reliée à une suspension pneumatique (LF) de la semi-remorque basculante (KSA) de manière à ce que la suspension pneumatique (LF) s'abaisse lorsque la benne basculante (KA) est inclinée.

13. Dispositif selon la revendication 12, dans lequel l'unité de commande signale également un levage à la fin du processus de réduction de charge de la suspension pneumatique (LF).

14. Dispositif selon l'une des revendications 1 à 13, **caractérisé en ce que** l'unité de commande (ST) est en outre reliée à un système de surveillance de la pression des pneus (RD) qui délivre la pression des pneus d'une ou plusieurs roues du véhicule tracteur (ZF) ou de la semi-remorque basculante (KSA), dans lequel l'unité de commande (ST) combine la pression de pneu mesurée ou les pressions de pneus mesurées avec l'angle d'inclinaison latérale (SW), l'angle de basculement (KW) et l'angle de gauchissement (EW).
